# EUROPEAN PATENT APPLICATION

(11) **EP 1 172 595 A2**
(43) Date of publication of application: **16.01.2002**
(21) Application number: 01305939.9
(22) Date of filing: 10.07.2001
(51) Int. Cl.: F16L 25/00, F16L 37/092

(54) **Improvements relating to push-in tube fittings**

(30) Priority: 15.07.2000 GB 0017355
(71) Applicant: IMI YORKSHIRE FITTINGS LIMITED, Leeds, LS1 1RD (GB)
(72) Inventor: Graham, Peter David, Wakefield, Yorkshire WF1 3SN (GB)
(74) Representative: Makovski, Priscilla Mary

(57) **Abstract**

In order to ensure electrical continuity in a water supply installation, electrical contact between a metal tube 1 and a metal-bodied push-in fitting 2 is ensured by attaching a separate element 8 to the end of the tube 1 before it is inserted in the fitting 2. The element 8 provides electrical contact between the fitting 2 and the tube 1, and/or urges the tube 1 laterally into contact with the internal surface of the body of the fitting 2 at a diametrically opposite region.

## Description

This invention relates to metal-bodied push-in tube fittings and more particularly to a method and means of ensuring, for the purpose of achieving electrical earth (or "equi-potential") bonding in, for example, a water supply installation, that one or more metallic, eg. copper, brass, or stainless steel, tubes connected to the fitting make good electrical contact with the fitting body.

With certain designs of metal-bodied push-in pipe fittings, such as our TECTITE (Registered Trade Mark) range of fittings, it is possible because of design clearances, for a metal tube connected to the fitting to be slightly, but completely, clear of the fitting body and, therefore, for there to be electrical discontinuity between the tube and the body. This could lead to an inadvertent breach of electrical Regulations where the installation in question is intended to be earth bonded. It is an object of the present invention to solve that problem.

In accordance with a first aspect of the present invention, there is provided a method of connecting a metal tube to a metal-bodied push-in fitting so as to ensure electrical contact between the body of the fitting and the tube which comprises attaching a separately formed element to the end of the tube prior to insertion of the tube into the fitting with at least part of the element lying on or adjacent to the external surface of the tube and then inserting the tube and the attached element into the fitting, the element serving itself to provide an electrically conductive path between the tube and the body of the fitting and/or to urge the tube laterally into contact with the internal surface of the body of the fitting and thereby establish electrical contact between them.

The separately formed element is preferably a generally U-shaped clip in the nature of a hair grip which, in use, extends longitudinally of the tube with a first arm located in the tube bore and a second arm lying on the external surface of the tube. The second arm in particular may be radially deformable, or include one or more radially deformable portions, whereby a given clip may perform its function over a range of fitting body/tube clearances.

The clip is preferably made of a metal or other electrically conductive material and thus itself provides a localised electrical path between the tube and the internal surface of the fitting body. In addition, however, the clip serves to displace the tube slightly from a truly co-axial position within the fitting body and urges the tube into direct electrical contact with the internal surface of the body in a region thereof diametrically opposite the location of the clip. However, the latter mode of electrical contact may alone suffice in which case the clip may be made of an electrically insulating material, such as a plastics material.

The present invention, in a second aspect, also provides a metal-bodied push-in fitting to which at least one metal tube has been connected by the method defined above.

The present invention, in a third aspect, also provides a combination of a metal-bodied push-in fitting and a metal tube connected to it to ensure electrical contact between the body of the fitting and the tube, the connection including a separately formed element attached to the end of the tube prior to insertion of the tube into the fitting, with at least part of the element lying on or adjacent to the external surface of the tube, and on insertion of the tube and attached element into the fitting, the element serves itself to provide an electrically conductive path between the tube and the body of the fitting, and/or to urge the tube laterally into contact with the internal surface of the body of the fitting and thereby establish electrical contact between them.

Further features of the separately formed element are as described above in relation to the first aspect.

The invention will now be described in more detail, by way of example only, with reference to the accompanying drawings, in which:
**Figure 1** is a scrap sectional side elevation of a push-in tube fitting to which a metallic tube/clip has been coupled;
**Figures 2 and 3** are scrap sectional side elevations illustrating application of the clip to the tube prior to insertion of the tube into the fitting shown in Figure 1;
**Figures 4 to 6** are, respectively, side elevations of three different forms of clip suitable for use in the method of the invention; and
**Figure 7** is a perspective view, to a larger scale, of a clip substantially as shown in Figure 5.

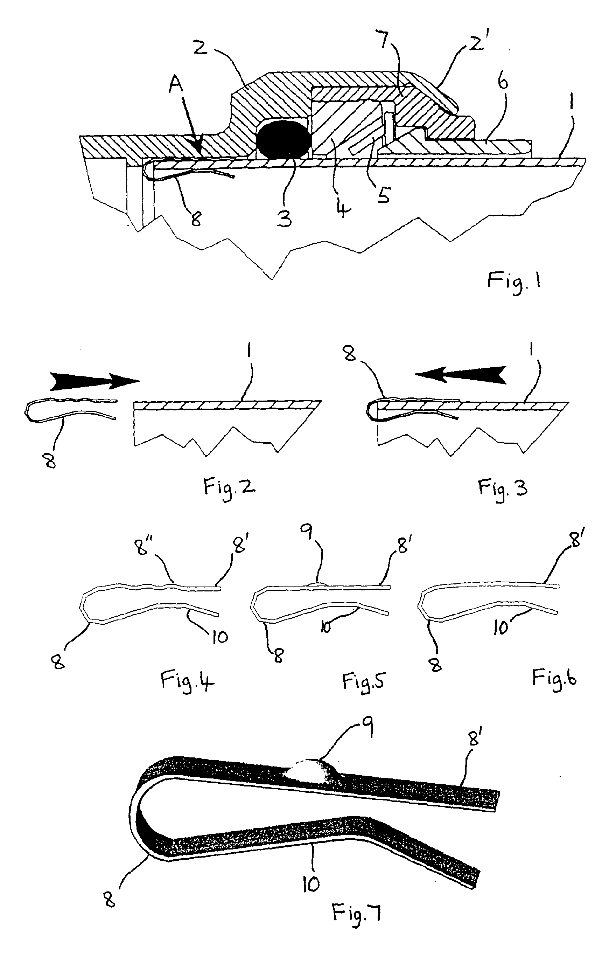

Referring first to Figure 1, this depicts, in sectional side elevation, part of a straight, releasable push-in fitting for connecting together two metallic, e.g. copper or stainless steel, tubes, only one of which is shown and is designated 1. The fitting is one in our range of TECTITE (Registered Trade Mark) fittings and comprises a metal, e.g. brass, body 2 which houses an O-ring seal 3, a plastics spacer ring 4, a stainless steel grab ring 5 and a plastics release sleeve 6.

The spacer ring 4, grab ring 5 and release sleeve 6 are, for the purpose of manufacturing the fitting, pre-assembled into an annular plastics cage 7 which, after insertion of the O-ring 3 into the body 2, is inserted into the body 2 and retained therein by radially inwardly deforming an end portion 2' of the body 2 about the cage 7.

The mode of operation of the fitting described above will be apparent to those skilled in the art and need not be explained herein. However, the reader is referred for further details to our UK patent specification No 2 299 838 A, which describes a similar fitting.
In order to accommodate conventional tolerances in the outside diameter of commercial copper or other metal tubes, a clearance is designed into the internal diameter of the fitting body 2. Accordingly, while some tubes will, at their innermost ends, make contact with the body 2, others may not and the resulting situation will, of course, be beyond the control and knowledge of the installer. This creates a potential problem where there is a requirement for earth (or "equi-potential") bonding in the installation in question, i.e. where there must be electrical continuity between the tubes and the fitting bodies.

In accordance with a preferred embodiment of the invention, and with reference to Figure 2, this problem is solved by attaching a generally U-shaped metallic clip 8 to the end of the tube 1, before it is inserted into the fitting, by sliding the clip 8 longitudinally over the wall of the tube 1 in the direction of the arrow, so that a first arm 10 is inside the tube 1, and a second arm 8' is outside the tube 1. Figure 3 shows the clip 8 in place whereafter the tube 1/clip 8 assembly is inserted into the fitting in the direction of the arrow. The clip 8 in essence takes up any clearance between the tube 1 and the body 2 of the fitting and serves two functions. First, it forms a local electrically conductive bridge between the tube 1 and the body 2 in the region A shown in Figure 1. Secondly, it forces the tube 1 out of true co-axiality with the body 2 and against a diametrically opposite region of the body 1, thereby causing direct electrical contact in that region between the tube 1 and the body 2.

So that a given clip 8 can serve to accommodate different tube O.D. tolerances, its second, external arm is preferably either radially deformable as a whole or includes one or more locally deformable portions. The clip 8 shown in Figure 4, which illustrates, on a larger scale, the clip 8 shown in Figures 1 to 3, has an external arm 8' formed with a number of lateral corrugations 8" which, if necessary, deform radially as the tube 1 is inserted into the innermost bore of the body 2 thereby taking up the prevailing tolerance. In the clip shown in Figure 5 this is achieved by an outwardly projecting, deformable dimple 9 pressed out of the arm 8'. Figure 7 is a perspective view, on an enlarged scale, of the clip substantially as shown in Figure 5 from which the preferred relative dimensions of the clip can be discerned. By way of example, a typical clip 8 suitable for use with any tube size may be about 10mm in length and made from strip material about 3 to 4mm wide and 0.2 to 0.3mm thick.

In the clip shown in Figure 6, the external arm 8' of the clip 8 is rendered radially deformable by virtue of its being bowed.

In all of the clips 8 shown, the first inner arm 10 is shaped as shown so that, when located on the tube wall as shown in Figures 2 and 3, the clip 8 lightly grips it.

As noted earlier, the clip 8 may, instead of being metallic or otherwise electrically conductive, be made of an electrically insulating material, such as a plastics material, in which case it will only serve the second function referred to above. However, this would suffice to give the desired electrical continuity. Where the clip is metallic, as is preferred, it should be made of metal which is, from a galvanic corrosion point of view, compatible with the material of the tube 1 and the body 2. Usually, depending on the circumstances, the clip 8 will be made of copper, brass or stainless steel.

While specific reference has been made only to the aforesaid element being in the form of a generally U-shaped clip, alternative forms of element adapted to perform the desired function will readily occur to those skilled in the art. For example, it could be in the form of a thin-walled, radially deformable metallic sleeve located, in use, about the inserted tube end.

## Claims

1. A method of connecting a metal tube (1) to a metal-bodied push-in fitting (2) so as to ensure electrical contact between the body of the fitting and the tube, **characterised in that** it comprises attaching a separately formed element (8) to the end of the tube (1) prior to insertion of the tube (1) into the fitting (2), with at least part of the element (8) lying on or adjacent to the external surface of the tube (1), and then inserting the tube (1) and the attached element (8) into the fitting (2), the element (8) serving itself to provide an electrically conductive path between the tube (1) and the body of the fitting (2) and/or to urge the tube (1) laterally into contact with the internal surface of the body of the fitting (2) and thereby establish electrical contact between them.

2. A method according to claim 1, in which the separately formed element (8) is a generally U-shaped clip which, in use, extends longitudinally of the tube (1) with a first arm (10) located in the tube bore and a second arm (8') lying on the external surface of the tube.

3. A method according to claim 2, in which at least the second arm (8') is radially deformable.

4. A method according to claim 2, in which the second arm (8') includes one or more radially deformable portions (8", 9).

5. A method according to any of claims 2 to 4, in which the clip (8) is of metal or other electrically conductive material.

6. A method according to any of claims 2 to 4, in which the clip (8) is of an electrically insulating material.

7. A combination of a metal-bodied push-in fitting (2) and a metal tube (1) connected by the method of any of claims 1 to 6.

8. A combination of a metal-bodied push-in fitting (2) and a metal tube (1) connected to it to ensure electrical contact between the body of the fitting and the tube, **characterised in that** the connection includes a separately formed element (8) attached to the end of the tube (1) prior to insertion of the tube (1) into the fitting (2), with at least part of the element (8) lying on or adjacent to the external surface of the tube (1), and on insertion of the tube (1) and attached element (8) into the fitting (2), the element (8) serves itself to provide an electrically conductive path between the tube (1) and the body of the fitting (2), and/or to urge the tube (1) laterally into contact with the internal surface of the body of the fitting (2) and thereby establish electrical contact between them.

9. A combination according to claim 8, in which the separately formed element (8) is a generally U-shaped clip which, in use, extends longitudinally of the tube with a first arm (10) located in the tube bore and a second arm (8') lying on the external surface of the tube (1).

10. A combination according to claim 9, in which at least the second arm (8') is radially deformable.

11. A combination according to claim 9, in which the second arm (8') includes one or more radially deformable portions (8", 9).

12. A combination according to any of claims 9 to 11, in which the clip (8) is of metal or other electrically conductive material.

13. A combination according to any of claims 9 to 11, in which the clip (8) is of an electrically insulating material.
